# DEMANDE DE BREVET EUROPEEN

(11) **EP 1 433 632 A1**
(43) Date de publication de la demande: **30.06.2004**
(21) Numéro de dépôt: 03293242.8
(22) Date de dépôt: 19.12.2003
(51) Int. Cl.: B60J 1/02

(54) **Pare-brise pour véhicule automobiles**

(30) Priorité: 23.12.2002 FR 0216570
(71) Demandeur: Peugeot Citroen Automobiles SA, 78140 Vélizy Villacoublay (FR)
(72) Inventeur: Besson, Jack, 78200 Mantes La Jolie (FR)
(74) Mandataire: Lanceplaine, Jean-Claude

(57) **Abrégé**

L'invention a pour objet un pare-brise (1) pour véhicules automobiles, comportant une vitre (2), caractérisé en ce que la vitre (2) est munie au moins sur son bord inférieur (2a), d'un surmoulage (10) comportant une zone de jonction (10a) avec la vitre (2) affleurant la surface externe de cette vitre (2).

## Description

La présente invention concerne un pare-brise pour véhicules automobiles.

De manière classique, les véhicules automobiles comportent un pare-brise formé par une vitre qui est le plus souvent collée sur des éléments adjacents de la carrosserie.

Les véhicules automobiles sont également équipés d'un mécanisme de commande d'au moins un essuie-glace et d'au moins un gicleur d'un lave-vitre qui sont généralement montés sur un bandeau de la carrosserie situé au-dessous de la vitre du pare-brise. Le plus souvent, ce bandeau comporte également une gouttière de récupération de l'eau ruisselant de la surface externe de la vitre du pare-brise.

Lors de l'assemblage des différents éléments composant le véhicule, le montage du pare-brise et des pièces du mécanisme d'essuie-glace ainsi que du lave-glace nécessitent plusieurs interventions sur la chaîne de montage ce qui augmente les coûts et bien évidemment le temps nécessaire à cet assemblage.

Pour cela, on connaît des véhicules automobiles dont le pare-brise est équipé, au moins sur son bord inférieur, d'un élément d'étanchéité sur lequel sont montés les mécanismes d'essuie-glace. Généralement, cet élément d'étanchéité comporte une lèvre qui recouvre le bord inférieur de la vitre du pare-brise ce qui nuit à l'esthétique général du véhicule.

L'invention a donc pour objet un pare-brise pour véhicules automobiles, comportant une vitre, caractérisé en ce que la vitre est munie, au moins sur son bord inférieur, d'un surmoulage comportant une zone de jonction avec la vitre affleurant la surface externe de cette vitre.

Selon d'autres caractéristiques de l'invention :
- la zone de jonction du surmoulage est prolongée par une gouttière de récupération de l'eau ruisselant sur la surface externe de la vitre,
- la gouttière est en retrait par rapport à la surface externe de la vitre et comporte un rebord libre en appui contre un élément de la carrosserie, comme par exemple un capot-moteur, pour assurer l'étanchéité,
- le surmoulage comporte une grille d'entrée d'air par exemple reliée à un ensemble de climatisation,
- le surmoulage comporte, derrière la grille d'entrée d'air, une boîte de récupération de l'eau ruisselant de la surface externe de la vitre et munie d'au moins un conduit d'évacuation de cette eau,
- le surmoulage comporte au moins un orifice de passage d'un axe d'un essuie-glace et des orifices de montage d'un mécanisme d'entraînement dudit axe,
- le surmoulage comporte au moins un orifice de montage d'un gicleur d'un lave-vitre,
- le surmoulage comporte une ligne frangible de moindre résistance en cas de chocs,
- le surmoulage est réalisé en matière plastique ou en caoutchouc ou en un mélange à base de polymère,
- le surmoulage comporte intérieurement des éléments de rigidification.

D'autres caractéristiques et avantages de l'invention apparaîtront à la lecture de la description qui va suivre, donnée à titre d'exemple et faite en référence aux dessins annexés, sur lesquels :
- la Fig. 1 est une vue schématique en perspective d'un pare-brise conforme à l'invention,
- la Fig. 2 est une vue schématique en coupe selon la ligne 2-2 de la Fig. 1,
- la Fig. 3 est une vue schématique en coupe selon la ligne 3-3 de la Fig. 1,
- la Fig. 4 est une vue schématique de face de la partie inférieure d'une variante du pare-brise conforme à l'invention,
- la Fig. 5 est une vue schématique en coupe selon la ligne 5-5 de la Fig. 4,
- les Figs. 6A et 6B sont deux vues schématiques en coupe de deux modes de réalisation de la zone de raccordement du surmoulage sur la vitre du pare-brise.

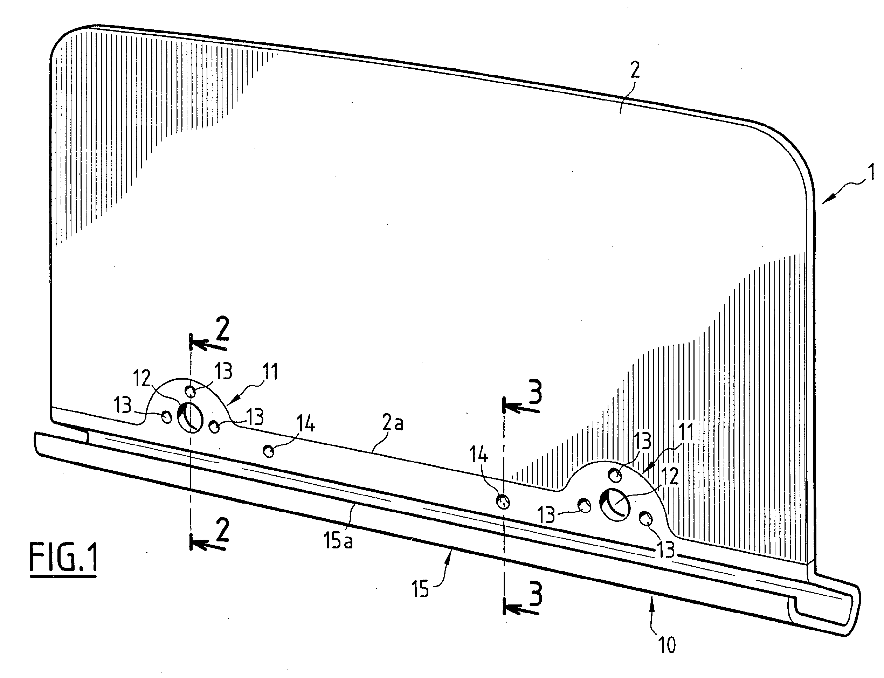

Sur la Fig. 1, on a représenté schématiquement un pare-brise désigné dans son ensemble par la référence 1 et qui est destiné à être fixé par exemple par collage sur des éléments adjacents de la carrosserie du véhicule automobile. Le pare-brise 1 est constitué par une vitre 2 munie au moins sur son bord inférieur 2a d'un surmoulage 10. Le surmoulage 10 suit le profil du bord inférieur 2a de la vitre 2.

D'une manière générale, le surmoulage 10 comporte une zone de jonction 10a avec la vitre 2 affleurant la surface externe de cette vitre 2 de façon à former avec cette surface une surface continue sans surépaisseur.

Comme montré à la Fig. 1, la zone de jonction 10a est prolongée par une gouttière 15 de récupération de l'eau ruisselant sur la surface externe de la vitre 2 et destinée notamment à la fixation d'un mécanisme d'au moins un essuie-glace.

Dans l'exemple de réalisation représenté à la Fig. 1, le surmoulage 10 comporte deux zones 11 de fixation d'un mécanisme d'essuie-glace munies chacune d'un orifice central 12 de passage d'un axe d'entraînement reliant le mécanisme au bras d'essuie-glace, non représenté, et de plusieurs orifices 13 de fixation de ce mécanisme.

De plus, le surmoulage 10 est muni d'au moins un orifice 14 de fixation d'un gicleur d'un lave-vitre et dans l'exemple de réalisation représenté sur la Fig. 1, de deux orifices 14 destinés chacun à la fixation d'un gicleur.

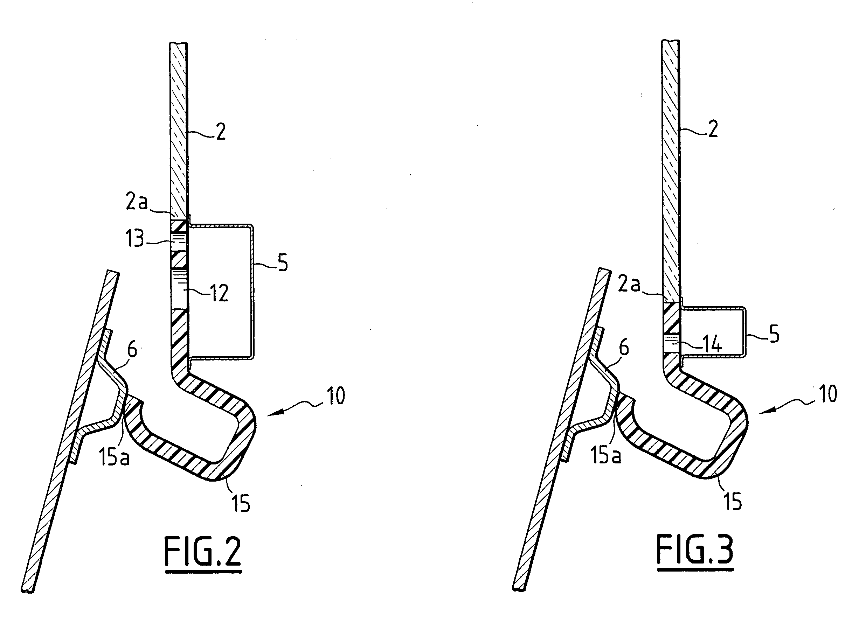

Ainsi que représenté plus particulièrement sur les Figs. 2 et 3, la gouttière 15 d'écoulement de l'eau ruisselant de la vitre 2 du pare-brise 1 est en retrait par rapport à la surface externe de cette vitre 2.

Le bord inférieur 2a de la vitre 2 ainsi que le surmoulage 10 sont fixés, par exemple, par collage, sur un élément 5 de la carrosserie et le rebord libre 15a de la gouttière 15 est en appui sur un autre élément 6 de la carrosserie, comme par exemple un capot-moteur, de façon à assurer l'étanchéité entre les deux éléments 5 et 6 au niveau de la partie inférieure du pare-brise 1.

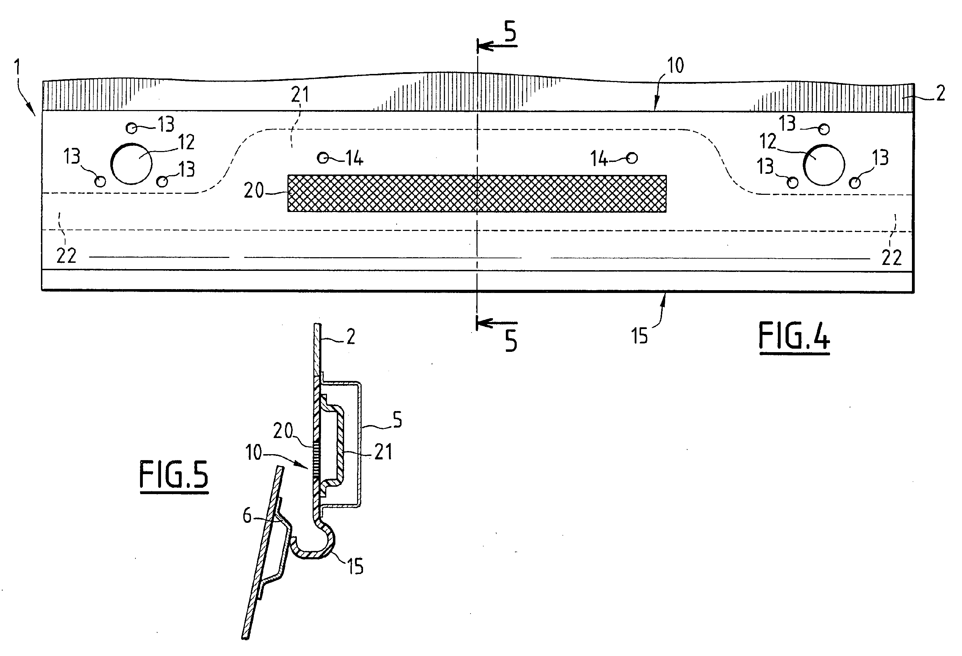

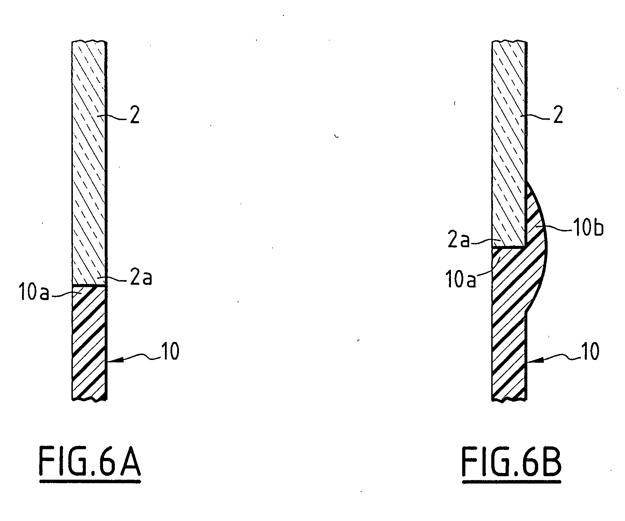

Selon un autre mode de réalisation représenté sur les Figs. 4 et 5, le surmoulage 10 comporte une grille 20 d'entrée d'air par exemple reliée à un système de climatisation du véhicule. Le surmoulage 20 peut aussi comporter, derrière la grille 20 d'entrée d'air, une boîte 21 de récupération de l'eau ruisselant de la vitre 2. Cette boîte 21 est munie d'un ou de plusieurs conduits 22 d'évacuation de l'eau, soit le long de la structure du véhicule dans une zone située au-dessous du capot, soit le long de la structure dans le passage de roue.

Le surmoulage 10 est réalisé en matière plastique ou en caoutchouc ou en un mélange à base de polymères.

Selon une variante, le surmoulage 10 peut comporter intérieurement des éléments de rigidification, comme par exemple des éléments métalliques.

Par ailleurs, le surmoulage 10 peut comporter une ligne de moindre résistance formant une ligne de rupture en cas de chocs, comme décrit dans le document FR-A-2 838 692.

La zone d'accostage de la vitre 2 et du surmoulage 10 peut être réalisée de différentes manières, comme représentées sur les Figs. 6A et 6B.

Selon un premier mode de réalisation, la zone de jonction 10a entre le bord inférieur de la vitre 2 et le bord du surmoulage 10 est à bords jointifs sans surépaisseur des deux côtés de la vitre 2, comme représenté à la Fig. 6A.

Selon un second mode de réalisation représenté à la Fig. 6B, la zone de jonction 10a du surmoulage 10 avec la vitre 2 est affleurante du côté de la surface externe de cette vitre 2 et comporte une lèvre 10b s'étendant sur la surface interne de ladite vitre 2.

Le surmoulage 10 peut être ménagé sur un autre bord de la vitre 2, comme par exemple le bord supérieur de cette vitre 2.

Avant son montage sur le véhicule, le pare-brise 1 est équipé du mécanisme d'essuie-glace en introduisant l'axe de chaque essuie-glace dans un orifice 12 et en fixant le mécanisme correspondant sur le surmoulage 10 par l'intermédiaire des orifices 13, ce surmoulage 10 comportant la gouttière 15.

De plus, un gicleur de lave-vitre est monté dans chaque orifice 14 du surmoulage 10.

Le pare-brise ainsi prééquipé est ensuite transféré sur la chaîne de montage du véhicule automobile ce qui permet de réduire le nombre d'opérations et, de ce fait, les coûts.

## Revendications

1. Pare-brise (1) pour véhicules automobiles, comportant une vitre (2), **caractérisé en ce que** la vitre (2) est munie au moins sur son bord inférieur (2a), d'un surmoulage (10) comportant une zone de jonction (10a) avec la vitre (2) affleurant la surface externe de cette vitre (2).

2. Pare-brise (1) selon la revendication 1, **caractérisé en ce que** la zone de jonction (10a) du surmoulage (10) est prolongée par une gouttière (15) de récupération de l'eau ruisselant sur la surface externe de la vitre (2).

3. Pare-brise (1) selon la revendication 2, **caractérisé en ce que** la gouttière (15) est en retrait par rapport à la surface externe de la vitre (2) et comporte un rebord libre (15a) d'appui contre un élément (6) de la carrosserie, comme par exemple un capot-moteur, pour assurer l'étanchéité.

4. Pare-brise (1) selon l'une quelconque des revendications 1 à 3, **caractérisé en ce que** le surmoulage (10) comporte une grille (20) d'entrée d'air, par exemple reliée à un ensemble de climatisation.

5. Pare-brise (1) selon la revendication 5, **caractérisé en ce que** le surmoulage (10) comporte, derrière la grille (20) d'entrée d'air, une boîte (21) de récupération de l'eau ruisselant de la surface externe de la vitre (2) et munie d'au moins un conduit (22) d'évacuation de cette eau.

6. Pare-brise (1) selon l'une quelconque des revendications précédentes, **caractérisé en ce que** le surmoulage (10) comporte au moins un orifice (12) de passage d'un axe d'un essuie-glace et des orifices (13) de montage d'un mécanisme d'entraînement dudit axe.

7. Pare-brise (1) selon l'une quelconque des revendications précédentes, **caractérisé en ce que** le surmoulage (10) comporte au moins un orifice (14) de montage d'un gicleur d'un lave-vitre.

8. Pare-brise (1) selon l'une quelconque des revendications précédentes, **caractérisé en ce que** le surmoulage (10) comporte une ligne de moindre résistance en cas de chocs.

9. Pare-brise (1) selon l'une quelconque des revendications précédentes, **caractérisé en ce que** le surmoulage (10) est réalisé en matière plastique ou en caoutchouc ou en un mélange à base de polymères.

10. Pare-brise (1) selon l'une quelconque des revendications précédentes, **caractérisé en ce que** le surmoulage (10) comporte intérieurement des éléments de rigidification.
